(19) Europäisches Patentamt
European Patent Office
Office européen des brevets

(11) **EP 1 402 091 B1**

(12) **EUROPÄISCHE PATENTSCHRIFT**

(45) Veröffentlichungstag und Bekanntmachung des Hinweises auf die Patenterteilung:
**16.01.2008  Patentblatt 2008/03**

(21) Anmeldenummer: **02769467.8**

(22) Anmeldetag: **07.05.2002**

(51) Int Cl.:
*D01F 1/10* *(2006.01)*         *D01F 6/04* *(2006.01)*
*D01F 6/06* *(2006.01)*         *D01F 6/46* *(2006.01)*
*C08G 65/332* *(2006.01)*     *C08L 71/02* *(2006.01)*
*C08L 23/02* *(2006.01)*

(86) Internationale Anmeldenummer:
**PCT/EP2002/005010**

(87) Internationale Veröffentlichungsnummer:
**WO 2002/092891 (21.11.2002 Gazette 2002/47)**

(54) **HYDROPHILIEADDITIVE**

HYDROPHILIC ADDITIVES

ADDITIFS D'HYDROPHILIE

(84) Benannte Vertragsstaaten:
**AT BE CH CY DE DK ES FI FR GB GR IE IT LI LU MC NL PT SE TR**

(30) Priorität: **16.05.2001  DE 10123863**

(43) Veröffentlichungstag der Anmeldung:
**31.03.2004  Patentblatt 2004/14**

(73) Patentinhaber: **Cognis IP Management GmbH 40589 Düsseldorf (DE)**

(72) Erfinder:
• **WILD, Christine**
  **40724 Hilden (DE)**
• **MATHIS, Raymond**
  **40627 Düsseldorf (DE)**
• **BIRNBRICH, Paul**
  **42719 Solingen (DE)**
• **PADURSCHEL, Petra**
  **40822 Mettmann (DE)**

(56) Entgegenhaltungen:
**EP-A- 0 073 479          WO-A-01/75199**
**WO-A-95/10648          DE-A- 2 343 198**
**DE-B- 1 296 803**

**Beschreibung**

Die vorliegende Erfindung betrifft Additive zur permanenten internen Hydrophilierung von Polyolefine enthaltenden Materialien, vorzugsweise von Polypropylenfasern.

In zahlreichen Fällen muß die Oberfläche von Kunststoff-Erzeugnissen mit speziellen Effekten versehen werden, die sich während der Formgebung entweder aus technischen Gründen gar nicht bzw. nur unvollkommen oder aber aus wirtschaftlichen Gründen nur unvorteilhaft erzeugen lassen. Ein solcher Effekte ist beispielsweise die Verbesserung der Benetzbarkeit mit polaren Flüssigkeiten wie Wasser - technische Anwendungen liegen hier beispielsweise auf dem Gebiet der Herstellung von Hygieneartikeln.

Bei der Herstellung von Hygieneartikeln, wie Windeln oder Damenbinden, aber auch von Wischtücher oder Geovliesen werden absorbierende Materialien verwendet, um wäßrige Flüssigkeiten aufzunehmen. Um den direkten Kontakt mit dem absorbierenden Material beim Tragen zu verhindern und den Tragekomfort zu erhöhen wird dieses Material mit einem dünnen, wasserdurchlässigen Vliesstoff umhüllt. Derartige Vliesstoffe werden üblicherweise aus synthetischen Fasern, wie Polyolefin- oder Polyesterfasern hergestellt, da diese Fasern preiswert zu produzieren sind, gute mechanische Eigenschaften aufweisen und thermisch belastbar sind. Allerdings eignen sich unbehandelte Polyolefin- oder Polyesterfasern für diesen Einsatzzweck nicht, da sie aufgrund ihrer hydrophoben Oberfläche keine ausreichende Durchlässigkeit für wäßrige Flüssigkeiten aufweisen.

Es ist prinzipiell möglich, die Fasern durch nachträgliches Beschichten mit entsprechenden Präparationen die nötigen hydrophilen Eigenschaften zu verleihen (externe Additive) oder bereits durch Zusatz geeigneter Additive bei der Herstellung der Fasern, diese ausreichend hydrophil auszurüsten (interne Additive). Letzteres wird in der WO 95/10648 beschrieben, wobei dort Diester von Polethylenglykol mit Fettsäuren bzw. deren Derivaten als geeignete permanenten Additive offenbart werden. In den Beispielen werden Umsetzungsprodukte von Ölsäure mit Polyethylenglykol der Molmasse 400 als besonders vorteilhaft beschrieben. Aus der nicht-vorveröffentlichten DE 100 155 54 der Anmelderin sind weiterhin spezielle Umsetzungsprodukte von zwei Teilen Laurinsäure mit Polyethylenglykolen bekannt, die sich als interne Additive zur Hydrophilierung von Polyolefinfasern eignen.

Derartige Additive werden in der Regel zusammen mit einem Polyolefin-Granulat zu einem Vorgemisch (Masterbatch) verarbeitet, das dann als solches dem Polymergranulat vor der Verarbeitung zur Faser oder zu sonstigen Endprodukten zugesetzt und anschließend extrudiert wird. Gewünscht ist es aus Kostengründen aber, solche Additive direkt während des Extrusionsprozesses in der Extrusionsanlage zudosieren zu können. Bei dem Versuch, Additive gemäß dem Stand der Technik durch Direktdosierung zu verwenden, treten aber Probleme mit der Kältestabilität der Additive auf. Die Verbindungen weisen Kältetrübungspunkte von größer 20 °C auf. Beim Einsatz in einer Direktdosieranlage kommt es daher zu einer Auskristallisation der Verbindungen und somit zu einer Verstopfung der Düsen.

EP-A-0 073 479 beschreibt Alkylenoxidpolymerisate mit einer Molmasse von 1.500 bis 35.000 erhalten durch Umsetzung eines Diols mit $C_{8-22}$-Alkenoxiden und $C_{2-4}$-Alkenoxiden, wobei der Anteil des $C_{8-22}$-Alkenoxids in dem Polymeren 20-80 Gew.-% beträgt.

WO-A-01/75199 beschreibt Additive zur permanente Hydrophilierung von Polyolefine enthaltenden Materialien, insbesondere Polypropylenfasern. Hierzu werden Umsetzungsprodukte von 1 Teil Polyethylenglykol mit 2 Teilen Fetsäuren mit 10-12 C-Atomen oder deren derivaten eingesetzt.

Die Aufgabe der vorliegenden Erfindung bestand daher darin, Additive zur permanenten Hydrophilierung von Polyolefinfasern bereitzustellen, welche die oben aufgezeigten Nachteile nicht aufweisen. Diese Additive müssen in der Lage sein, den Fasern bzw. Produkten ausreichende Hydrophilie zu verleihen, die auch bei Belastung, beispielsweise mehrfachem, wiederholten Benetzen mit Wasser, wie er bei Waschprozessen auftritt, erhalten bleibt.

Es wurde gefunden, daß bestimmte oligomere Ester die geforderten Eigenschaften aufweisen.

Ein erster Gegenstand der vorliegenden Erfindung betrifft interne Hydrophilieadditive für synthetische Fasern, die Polyolefine enthalten wobei die Additve der allgemeinen Formel (I) folgen,

$$A-B-C-B-A \qquad (I)$$

in der A jeweils einen Rest R-C00 bedeutet, wobei R für einen gesättigten, verzweigten oder unverzweigten Alkylrest mit 7 bis 21 C-Atomen steht, B jeweils eine Gruppe $(C_nH_{2n}O)_k$ bedeutet, wobei n für ganze Zahlen von 2 bis 4 steht und k die Werte von 1 bis 15 aufweisen kann und C für einen linearen oder verzweigten Alkylenrest der Grüppe $CH_2$-CH$(CH_3)$, $CH_2$-$CH_2$-$CH_2$ oder $(CH_2)_4$ steht. Der Index k bezieht sich hierbei auf die einzelne Gruppe B und gibt nicht die Gesamtzahl der Gruppen B im Molekül angibt. Der Index k variiert aufgrund der unterschiedlichen, technisch bedingten Alkoxylierungsgrade der Einzelmoleküle und kann daher auch ungeradzahlig sein.

Die Verbindungen der allgemeinen Formel (I) werden beispielsweise durch Umsetzung von Diolen, z.B. Polyalkylenglykolen und Alkoxiden sowie mit gesättigten Fettsäuren erhalten. Dabei müssen zum einen

Entsprechende Diole vorhanden sein, die den Baustein C der erfindungsgemäßen Additive bilden, als auch Ethylen-, Propylen- und/oder Butylenoxid, welche die Gruppen B in den erfindungsgemäßen Verbindungen bilden. Die freien Hydroxylgruppen der Alkoxide werden mit gesättigten Fettsäuren mit 8 bis 22 C-Atomen terminiert.

Die Diole werden ausgewählt aus der Gruppe 1,2-Propandiol, 1,3-Propandiol und 1,4-Butandiol. Prinzipiell können auch Mischungen der Diole eingesetzt werden, wobei es sich als vorteilhaft erwiesen hat, nur ein Diol zur Reaktion auszuwählen. In Abhängigkeit vom Diol, mit dem das Syntheseverfahren gestartet wurde werden Verbindungen der Formel (I) mit unterschiedlichen Gruppen C erhalten. Dem entsprechend ist diese zweiwertige Gruppe eine $CH_2$-$CH_2$, $CH_2$-$CH(CH_3)$, $CH_2$-$CH_2$-$CH_2$ oder $(CH_2)_4$ Gruppe.

Die Alkoxide sind ausgewählt aus der Gruppe von Ethylenoxid, Propylenoxid und Butylenoxid, wobei hier auch beliebige Mischungen möglich sind. Werden verschiedenartige Alkoxide umgesetzt kann die Alkoxylierung sowohl Blockweise als auch randomisiert erfolgen. Die Anzahl von Alkoxideinheiten in den Verbindungen der Formel (I) schwankt im Bereich von insgesamt 2 bis 30, so daß k jeweils den Wert 1 bis 15 annehmen kann. Bevorzugt sind solche Verbindungen der Formel (I), in der k jeweils für die Zahlen 2 bis 15 und insbesondere 4 bis 10 und ganz besonders bevorzugt für 10 oder 5 steht. Weiterhin sind solche Verbindungen der Formel (I) bevorzugt, die auch Ethylenoxideinheiten als Gruppe B enthalten, vorzugsweise nur Ethylenoxideinheiten. Es können aber auch solche Verbindungen eingesetzt werden, die nur Propylenoxid-Gruppen enthalten. Weiterhin sind Misch-Alkoxylate, vorzugsweise auch Ethylenoxid- und Propylenoxid-Gruppen bevorzugt. In diesen Fällen sollte die Anzahl der Ethylenoxid-Gruppen mindestens gleich sein der Zahl der Propylenoxid-Gruppen (PO) und vorzugsweise sollte ein Überschuss an Ethylenoxid-Gruppen (EO) vorhanden sein. Hier sind Verhältnisse EO : PO von 5:1 bis 2:1 1 bevorzugt.

Geeignete gesättigte Fettsäuren, die die Gruppe A der erfindungsgemäßen Verbindungen bilden können, sind vorzugsweise ausgewählt aus der Gruppe Octansäure, Nonansäure, Decansäure, Undecansäure, Dodecansäure, Tridecansäure, Tetradecansäure, Pentadecansäure, Hexadecansäure Heptadecansäure und Octadecansäure, sowie Nonadecansäure, Eicosansäure und Heneicosansäure sowie Docosansäure. Bevorzugt werden solche Verbindungen der Formel (I), in der R für einen gesättigten Alkylrest mit 9 bis 13 bzw. 9 bis 11 C-Atomen steht. Ganz besonders bevorzugt sind Verbindungen der Formel (I), die auf Decansäure ($C_{10}$) und die Undecansäure ($C_{11}$) basieren.

Die Verwendung von ungesättigten Säuren ist ebenfalls möglich, allerdings zeigen Verbindungen der Formel (I), deren Reste ungesättigte Funktionalitäten aufweisen, eine unzureichende Oxidationsstabilität.

Um die eingangs geschilderte Probleme zu überwinden, sollten die Verbindungen der Formel (I) vorzugsweise einen Kältetrübungspunkt von weniger als 20°C aufweisen. Der Kältetrübungspunkt im Sinne der vorliegenden Anmeldung wird gemäß DIN EN 23015 wie folgt bestimmt: Ein Reagenzglas mit Kältethermometer und zu prüfendem Produkt wird in eine Kältelösung (Ethylenglykol/Wasser ca. 1:1, ca. - 20°C aus Tiefkühlschrank ) gestellt und solange gekühlt, bis eine deutlich sichtbare Trübung einsetzt. Anschließend wird durch Rühren mit dem Thermometer bei Raumtemperatur (21 °C) die Temperatur bestimmt, bei der das Produkt wieder vollkommen klar ist.

Bevorzugt sind dabei solche Verbindungen der Formel (I), deren Kältetrübungspunkt niedriger als 12 °C, vorzugsweise niedriger als 10 °C und insbesondere niedriger als 6 °C ist. Mit besonderem Vorteil werden Verbindungen der Formel (I) ausgewählt, deren Kältetrübungspunkt niedriger als 5 °C und insbesondere niedriger als 3 °C ist.

Bevorzugte Verbindungen, die sich als Additive im Sinne der vorliegenden Erfindung eignen, gehorchen der Formel (I) in der R für einen linearen Alkylrest mit 9 C-Atomen steht, k jeweils den Wert 5 hat, n für 2 und C für einen Rest $CH_2$-$CH(CH_3)$ steht oder in der R für einen linearen Alkylrest mit 11 C-Atomen steht, k den Wert 5 hat, n für 2 und C für einen Rest $CH_2$-$CH_2(CH_3)$ steht. Ein bevorzugtes Additiv der Formel (I) weist als Teil C einen Diethylenglykol-Rest auf, als Gruppen B sind 5 bis 7 Teile EO und 2 bis 4 Teile PO enthalten, und der Rest R steht jeweils für einen Laurinsäurerest.

Die erfindungsgemäßen Additive können alleine oder in Abmischungen untereinander eingesetzt werden. Außerdem können weitere, aus dem Stand der Technik bekannte Additive für die Polymerextrusion bzw. -herstellung zugegeben werden.

Im Rahmen der Erfindung werden die Additive in Polyolefine enthaltenden Materialien, vorzugsweise Fasern, Flächengebilden, wie Vliesen, Folien und Schäumen zur permanent Hydrophilierung eingesetzt.

Vorzugsweise werden die erfindungsgemäßen Additive in Vliesstoffen bzw. Schäumen eingesetzt. Unter Schäumen sind dabei, wie in der Fachwelt allgemein üblich, Kunststoffe zu verstehen, die aufgrund vorhandener innerer Hohlräume mit Additiven beladen werden können. Die Beladung sollte dabei in einfacher Weise derart möglich sein, daß der erfindungsgemäße Kunststoffschaum, der ein poröses Trägermaterial darstellt, mit wenigstens einem Additiv versetzt wird und mit diesem bei einer unter dem Schmelzpunkt der Basispolymeren, die zur Herstellung des Kunststoffschaums eingesetzt wurden, jedoch über dem Schmelzpunkt des Additivs liegenden Temperatur gemischt wird; dabei fließt das Additiv in die inneren Hohlräume des Kunststoffschaumes, d.h. der Kunststoffschaum nimmt aufgrund seiner speziellen Struktur die flüssigen Additive quasi wie ein Schwamm auf.

Bezüglich des Polyolefine enthaltenden Materials eigenen sich an sich alle heute bekannten Polymer- und Copolymertypen auf Ethylen- beziehungsweise Propylen-Basis. Auch Abmischungen reiner Polyolefine mit Copolymeren sind grundsätzlich geeignet. Desgleichen können die Hydrophiliadditive in Mischungen aus Polyolefinen mit anderen synthetischen oder natürlichen Polymeren, z.B. Cellulose oder Hanf eingesetzt werden, um den Polyolefinfasern permanent hydrophile Eigenschaften zu geben.

Für die erfindungsgemäße Lehre besonders geeignete Polymertypen sind in der nachfolgenden Zusammenstellung aufgezählt: Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); Poly(propylene) wie isotaktisches Polypropylen; syndiotaktisches Polypropylen; Metallocen-katalysiert hergestelltes Polypropylen, schlagzähmodifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-co-propylen-co-konjugiertes Dien]).

Weitere geeignete Polymertypen sind: Poly(styrol); Poly(methylstyrol); Poly(oxymethylen); Metallocenkatalysierte alpha-Olefin- oder Cycloolefin-Copolymere wie Norbornen-Ethylen-Copolymere; Copolymere, die zu mindestens 60 % Ethylen und/oder Styrol enthalten und zu weniger als 40 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen.

Im Rahmen der vorliegenden Erfindung sind Homo- und Copolymere auf Basis von Ethylen und Propylen besonders bevorzugt. In einer Ausführungsform der vorliegenden Erfindung setzt man dementsprechend als Polyolefin ausschließlich Polyethylen ein, in einer anderen Ausführungsform ausschließlich Polypropylen, in einer weiteren Ausführungsform Copolymere auf Basis von Ethylen und Propylen.

In einer ganz besonders bevorzugten Ausführungsform der Erfindung werden die Additive in Polypropylenfasern verwendet. Derartige Fasern weisen vorzugsweise eine melt flow rate von größer 10 bis 1500 dg/min (gemessen bei 230 °C und 2,16 kg Belastung) auf wobei Fasern mit beispielsweise 150 bis 1200 oder 20 bis 25 bzw. 400 bis 1000 dg/min bevorzugt sein können.

Der Einsatz der erfindungsgemäßen Verbindungen der Formel (I) als interne Additive in polyolefinhaltigen Fasern führt zu einer verbesserten Hydrophilierung der Fasern, wobei gleichzeitig noch eine gut Wasserabsorption erzielt wird. Derartig intern additivvierte Fasern eignen sich daher für eine Vielzahl von technischen Verwendungen, insbesondere im Bereich von Hygienevliesstoffen oder für Wischtücher.

Weiterhin wird ein Verfahren zur Herstellung von Gegenständen, die ganz oder teilweise Polyolefine enthalten beansprucht, wobei man eine Polymergranulat, das ganz oder teilweise Polyolefine enthält, mit Verbindungen der Formel (I) in Mengen von 0,1 bis 5 Gew.-% bezogen auf das Granulat, versetzt und anschließend in an sich bekannter Weise zu Fasern oder Folien verarbeitet, vorzugsweise durch Extrusion.

Es hat sich als vorteilhaft erwiesen, die extrudierten und mit Additiven versehenen Fasern oder Folien mit Wasser nachzubehandeln. Diese Nachbehandlung sollte vorzugsweise direkt und unmittelbar nach der Extrusion erfolgen, um eine optimale Hydrophilierung zu erreichen. Vorzugsweise wird die Wasserbehandlung so ausgeführt, daß die extrudierten Produkte mit Wasser von 80 bis 90 °C in Kontakt gebracht werden. Dies kann durch Sprühen, Tauchen oder über Kissrollen erfolgen. Auch eine Behandlung der Produkte mit Wasserdampf, vorzugsweise überhitztem Wasserdampf, ist geeignet. Anschließend werden die behandelten Produkte getrocknet.

Die Gegenstände, vorzugsweise Fasern bzw. Folien, oder Flächengebilden wie Vliesstoffe, aus diesen Fasern, enthalten die Additive vorzugsweise in Mengen von 0,1 bis 5 Gew.-%, vorzugsweise 0,5 bis 5 Gew.-% und insbesondere 1,0 bis 2,5 Gew.-% bezogen auf das Gesamtgewicht der Gegenstände.

Ein weiterer Gegenstand der Erfindung betrifft die Verwendung der Verbindungen der Formel (I) als interne Hydrophilieadditive in Polyolefinen enthaltenen Fasern oder Flächengebilden, insbesondere in Vliesstoffen. Eine Verwendung als externe Additive, also z.B. als Bestandteile einer extern anzuwendenden Präparation ist zwar auch möglich, aber nicht Gegenstand der vorliegenden Anmeldung.

Vliesstoffe können nach allen im Stand der Technik bekannten Verfahren der Vliesherstellung, wie sie beispielsweise in Ullmann's Encyclopedia of Industrial Chemistry, Vol. A 17, VCH Weinheim 1994, Seiten 572 - 581, beschrieben werden, hergestellt werden. Bevorzugt sind dabei Vliese, die entweder nach dem sogenannte "dry laid"- oder dem Spinnvlies- bzw. spunbond-Verfahren oder im melt-blow-Verfahren hergestellt wurden. Das "dry laid"-Verfahren geht von Stapelfasern aus, die üblicherweise durch Kardieren in Einzeifasern getrennt und anschließend unter Einsatz eines aerodynamischen oder hydrodynamischen Verfahrens zum unverfestigten Vliesstoff zusammengelegt werden. Dieser wird dann beispielsweise durch eine thermische Behandlung zum fertigen Vlies verbunden (das sogenannte "thermobonding"). Dabei werden die synthetischen Fasern entweder soweit erwärmt, daß deren Oberfläche schmilzt und die Einzelfasern an den Kontaktstellen miteinander verbunden werden, oder die Fasern werden mit einem Additiv überzogen, welches bei der Wärmebehandlung schmilzt und so die einzelnen Fasern miteinander verbindet. Durch Abkühlung wird die Verbindung fixiert. Neben diesem Verfahren sind natürlich auch alle anderen Verfahren geeignet, die im Stand der Technik zum Verbinden von Vliesstoffen eingesetzt werden. Die Spinnvliesbildung geht dagegen von einzelnen Filamenten aus, die nach dem Schmelzspinnverfahren aus extrudierten Polymeren gebildet werden, welche unter hohem Druck durch Spinndüsen gedrückt werden. Die aus den Spinndüsen austretenden Filamente werden gebündelt, gestreckt und zu einem Vlies abgelegt, welches üblicherweise durch "thermobonding" verfestigt wird.

**Beispiele**

**Synthese der Additive**

Allgemeine Synthesevorschrift für die erfindungsgemäßen Additiv 1-4: Jeweils X mol Fettsäure werden mit y mol Diol in Gegenwart von 0,5% $H_3PO_2$ (50%ig) bei 240°C unter Stickstoff umgesetzt. Wenn kein Wasser mehr überdestilliert, wird die Temperatur auf 100°C herabgesetzt und evakuiert (15mbar). Sobald die Säurezahl über eine Stunde konstant ist kann die Reaktion beendet werden. Hierzu wird die $H_3PO_2$ mit einem zweifachen Überschuß an wasserfreiem Natriumcarbonat bei 80°C neutralisiert (ca. 30min). Die Salze werden anschließend abfiltriert unter Zuhilfenahme eines Filterhilfsmittels (hyflo Celite).

**Additiv 1**

2,05 mol Dodecansäure werden nach obiger Vorschrift mit 1,00 mol 1,2 Propandiol x 10EO über 9 h umgesetzt. SZ: 1,7; OHZ: 7,9

**Additiv 2**

2,05 mol Dodecansäure werden nach obiger Vorschrift mit 1,00 mol 1,2 Propandiol x 12EO über 9 h umgesetzt. SZ: 1,5; OHZ: 6,6

**Additiv 3**

1,95 mol Dodecansäure werden nach obiger Vorschrift mit 1,00 mol 1,3 Propandiol x 10EO über 8 h umgesetzt. SZ: 1,5; OHZ: 11,4

**Additiv 4**

2,00 mol Decansäure werden nach obiger Vorschrift mit 1,00 mol 1,3 Propandiol x 10EO über 7 h umgesetzt. SZ:1,6; OHZ: 15,2

**Benetzungstest**

Zum Beleg für die Wirkung der erfindungsgemäßen Additive 1 bis 5 in Polypropylengranulaten wurde der unten beschriebene Benetzungstest durchgeführt.

**Benetzungstest**

1. Man vermengt 600 g eines hochmolekularen Polypropylen-Granulates (Handelsprodukt "Eltex PHY 671" der Firma Solvay) mit 9,0 g (=1,5 Gew.-%) der - hinsichtlich einer hydrophilen Ausrüstung - zu prüfenden Substanz. Diese Mischung wird durch einen Trichter in einen Extruder eingebracht (Doppelschneckenextruder DSK 42/7 der Firma Brabender OHG / Duisburg). Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist. Unter dem Einfülltrichter befindet sich neben einer Wasserkühlung, die ein verfrühtes Schmelzen des Granulates bzw. Pulvers verhindern soll, auch eine gegenläufige Doppelschnecke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden ist. Dabei werden die Heizzonen I, II und III auf eine Temperatur von jeweils 200°C eingestellt, wobei die drei Heizzonen luftgekühlt werden, um die Temperatur konstant zu halten. Die Mischung von Polypropylen-Granulat und Prüfsubstanz wird automatisch durch die gegeneinander laufende Doppelschnecke in den Extruder eingezogen und entlang der Schnecke befördert. Die Drehzahl wird auf 25 Umdrehungen pro Minute eingestellt, um eine gute Durchmischung und Homogenisierung zu gewährleisten. Diese homogene Mischung gelangt schließlich in eine Düse, die eine vierte Heizzone darstellt. Die Temperatur dieser Düse wird auf 200 °C eingestellt - bei dieser Temperatur verläßt also die Mischung den Extruder. Die Düse wird so gewählt, daß der mittlere Durchmesser des Stranges nach dem Austritt aus dieser Düse im Bereich von etwa 2 - 3 mm liegt. Dieser Strang wird granuliert, d.h. in kleine Stücke geschnitten, wobei man Längen von etwa 2-4 mm einstellt. Das erhaltene Granulat läßt man auf 20 °C abkühlen. Dieses Granulat wird in einer Schmelzspinnanlage bei einer Verarbeitungstemperatur von 280 °C (d.h man stellt sowohl die Schmelzsterntemperatur als auch die Temperatur der Spinndüse auf 280 °C ein) gravimetrisch (d.h. durch Schwerkrafteinwirkung) in Fasern überführt. Die erhaltenen Fasern weisen einen Fasertiter im Bereich von etwa 10 - 30 dtex auf (1 dtex entspricht 1 g Faser pro 10000 m Faserlänge). Anschließend werden 500 m dieser Faser auf eine Rolle mit einem Durchmesser von 6,4 cm aufgewickelt. Diese auf die Rolle aufgewickelte Faser wird von der Rolle abgezogen und das abgezogene kreisförmige Gebilde durch mittiges Verknoten stabilisiert, wobei ein Gebilde erhalten wird, das die Form einer "8" hat; dieses Gebilde wird nachfolgend als "Strängchen" bezeichnet.

2. Man füllt einen 1-l-Meßzylinder (Glaszylinder mit einem Innendurchmesser von 6,0 cm) mit destilliertem Wasser von 20 °C und zwar bis zur 1000-ml-Markierung. Nun hält man das zu prüfende Strängchen in der Weise, das seine Längsrichtung mit der Vertikale des Meßzylinders übereinstimmt, d.h. daß das Strängchen als vertikale "8" erscheint. An den untersten Teil dieser "8" hängt man nun ein Gewicht, das aus Cu-Draht besteht, wobei die Masse des Cu-Drahtes 0,2064 g Cu pro Gramm Strängchen beträgt. Dieser Cu-Draht wird in Form von Windungen an dem Strängchen befestigt, wobei der Durchmesser der Cu-Draht-Windungen etwa 1 bis 2 cm beträgt; anschließend werden diese Cu-Draht-Windungen durch leichtes Drücken zwischen Daumen und Zeigefinger zusammengepreßt. Nun hält man das Strängchen mit dem Cu-Gewicht über die Wasseroberfläche des Meßzylinders und zwar so, daß der untere Teil des Cu-Gewichtes in das Wasser eintaucht und der unterste Teil des Strängchens sich etwa 2 mm über der Wasseroberfläche befindet. Dann lässt man das Strängchen los und mißt mit einer Stoppuhr die Zeit in Sekunden, die das Strängchen benötigt, um vollständig einschließlich seiner Oberkante ins Wasser einzutauchen (vollständige Eintauchzeit). Beginn und Ende der Meßzeit sind dadurch definiert, daß das unterste Ende des Strängchens jeweils die 1000-ml- und das obere Ende des Strängchens ebenfalls die 1000 ml- Marke passiert. Dieser erste Meßwert wird als C1-Wert ("Wert des ersten Benetzungszyklus") bezeichnet.

3. Das Strängchen wird unmittelbar nach Bestimmung des C1-Wertes aus dem Meßzylinder genommen, mit Zellstoff abgetupft und 1 Stunde in einem Umlufttrockenschrank (Typ UT 5042 EK der Firma Heraeus) bei 40 °C getrocknet. Anschließend wird Schritt 2 wiederholt. Der jetzt erhaltene Wert in Sekunden der vollständigen Eintauchzeit wird als C2-Wert ("Wert des zweiten Benetzungszyklus") bezeichnet. Trocknung und Bestimmung der vollständigen Eintauchzeit werden nun erneut wiederholt, wobei man den C3-Wert ("Wert des dritten Benetzungszyklus") erhält. Sofern die vollständige Eintauchzeit (C1- bis C3-Werte) oberhalb von 180 Sekunden liegen, wird der jeweilige Zyklus beendet.

**Ergebnisse**

Der Benetzungstest gilt als bestanden wenn die Sinkzeiten C1 bis C3 unter 5 Sekunden liegen. Die Ergebnisse des Tests für die erfindungsgemäßen Additive sind in der Tabelle I und für Additive des Standes der Technik in der Tabelle II wiedergegeben. Die Kältetrübungspunkte finden sich in der Tabelle III.

**Tabelle 1**

| Sinktest mit PP-Strängchen mit erfindungsgemäßen Additiven | | | | | | | |
|---|---|---|---|---|---|---|---|
| Nr. | Additiv | Masse Strängchen in g | Sinkgewicht Cu in g | Faktor=Sinkgew./ Strängchen | Sinkzeit C1 in s | Sinkzeit C2 in s | Sinkzeit C3 in s |
| 1 | POE (10) 1,2 Propandiol Didodecanoat | 1,5780 | 0,3263 | 0,2068 | 1,00 | 1,00 | 1,50 |
| 2 | POE (12) 1,2 Propandiol Didodecanoat | 1,3399 | 0,2768 | 0,2066 | 1,32 | 1,28 | 2,25 |
| 3 | POE (10) 1,3 Propandiol Didodecanoat | 1,5539 | 0,3209 | 0,2065 | 3,18 | 4,35 | 2,09 |
| 4 | POE (7) 1,3 Propandiol Didedecanoat | 1,2807 | 0,2632 | 0,2055 | 1,18 | 1,09 | 1,59 |

Zum Vergleich sind die Ergebnisse des Sinktests für Additive des Standes der Technik, gemäß der DE 100155 54 in Tabelle II aufgeführt;

**Tabelle II**

| Additiv | Masse Strängchen in g | Sinkgewicht Cu in g | Faktor= Sinkgew./ Strängchen | Sinkzeit 1 in s | Sinkzeit 2 in s | Sinkzeit 3 in s | Sinkzeit 4 in s | Sinkzeit 5 in s |
|---|---|---|---|---|---|---|---|---|
| 1,5%PEG-400-Dilaurat | 1,7648 | 0,3630 | 0,2057 | 1,2 | 1,2 | 1,2 | 1,2 | 1,3 |
| 1,5%PEG-400-Dilaurat | 1,7758 | 0,3673 | 0,2068 | 1,2 | 1,2 | 1,2 | 1,2 | 1,3 |

**Tabelle III** - Kältetrübungspunkte der erfindungsgemäßen Additive

| Produkt | Kältetrübungspunkt |
|---|---|
| 1 | 2°C |
| 2 | 5°C |
| 3 | 3°C |
| 4 | 3°C |
| PEG 400 dilaurat (Vergleich) | Trübe bei 25°C |

Weiterhin wurde ein Steighöhentest ("Wicking") durchgeführt und die Wasserabsorption von additivierten Vliesstoffen gemessen, um die Wirkung der erfindungsgemäßen Additive zu belegen. Dazu wurden jeweils Meltblown-Vliesstoffe aus Polypropylenenfasern (PP) hergestellt, wobei diese Fasern jeweils 2 Gew.-% an internen Hydrophilie-Additiven enthielten.

**Additiv A** ist ein Diester auf Basis von PEG400, verestert mit zwei Mol Laurinsäure, gemäß der Lehre der WO 01/75199 der Anmelderin.

**Additiv B** (erfindungsgemäß) ist ein mit Diethylenglykol gestartetes Produkt, welches anschließend mit Ethylen- und Propylenoxid umgesetzt und abschließend mit Laurinsäure endgruppenverschlossen wurde. Dies entspricht in der Formel (I) für C dem Rest $CH_2CH_2$-O-$CH_2CH_2$-O, für B die Reste EO und PO, wobei pro Mol des Additivs insgesamt 7 Mol EO und 2 Mol PO im Molekül enthalten sind. A stellt jeweils einen Laurinsäurerest dar.

Zum Vergleich wurde jeweils ein Vlies mit nicht-additivierten Fasern untersucht.

**A Steighöhentest (Wicking-Test)**

**Vorbereitung:**

Zuschneiden der Vliesmuster:  Größe: 225mm x 85mm
Anzahl: 4
Richtung: längs und quer

**Durchführung:**

1. Vliesmuster in Rahmen einlegen
2. Eingelegtes Vlies mit Rahmen 10mm eintauchen, in destilliertem Wasser.
3. Steighöhe nach 120 Sekunden ablesen

**Ergebnisse:**

|  | Steighöhe in mm |
|---|---|
| Additiv A | 0 |
| Additiv B | 30 |
| o. Additiv | 0 |

Die erfindungsgemäß additivvierten Vliesstoffe zeigen eine deutlich bessere Hydrophilierung als die nach dem Stand der Technik additivierten Produkte.

**B Wasserabsorption**

Bei dem Testverfahren handelt es sich um einen modifizierten EDANA-Test (Kapitel 10.1-72):

**Vorbereitung:**

Zuschneiden der Vliesmuster: Größe: 120mm x 120mm
Anzahl: 3
Gewicht: mindestens 1,0g (mehrere Vliese)

**Durchführung:**

1. Vliesmuster wiegen
2. 60 Sekunden in destilliertem Wasser legen (Vliesmuster beschweren)
3. Vertikal in Maschinenrichtung aufhängen und 120 Sekunden abtropfen lassen
4. Vliesmuster erneut wiegen
5. 24 Stunden trocknen lassen
6. Vorgang 1.-5. zweimal wiederholen

**Absoption (Wasseraufnahmekapazität) / % berechnen:**

$$X\% = \frac{Na\beta gewicht - Trockengewicht}{Trockengewicht} \times 100$$

In der folgenden Tabelle sind die Ergebnisse der Wasserabsorption wiedergegeben:

|  | Wasserabsorption in % |
|---|---|
| Additiv A | 1003 |
| Additiv B | 935 |
| o. Additiv | 129 |

Die Additive der vorliegenden Erfindung zeigen also eine ähnlich gute Wasserabsorption, wie Produkte des Standes der Technik und stellen daher eine Alternative zu diesen dar.

**Patentansprüche**

1.  Internes Hydrophilieadditiv für synthetische Fasern, die Polyolefine enthalten, gemäß allgemeiner Formel (I)

    A-B-C-B-A          (I)

    in der

    A einen Rest R-COO bedeutet, wobei R für einen gesättigten, verzweigten oder unverzweigten Alkylrest mit 7 bis 21 C-Atomen steht,
    B eine Gruppe $(C_nH_{2n}O)_k$ bedeutet, wobei n für ganze Zahlen von 2 bis 4 steht und k die Werte 1 bis 15 aufweisen kann,
    C für einen linearen oder verzweigten Alkylenrest der Gruppe $CH_2$-$CH(CH_3)$, $CH_2$-$CH_2$-$CH_2$ oder $(CH_2)_4$ steht.

2.  Hydrophilieadditiv gemäß Anspruch 1, **dadurch gekennzeichnet, dass** in der Formel (I) R für einen gesättigten, linearen Alkylrest mit 9 bis 13 C-Atomen und vorzugsweise 9 bis 11 C-Atomen steht.

3.  Hydrophilieadditiv nach den Ansprüchen 1 und 2, **dadurch gekennzeichnet, dass** in der Formel (I) k die Werte 1 bis 15, vorzugsweise 4 bis 10 und insbesondere 5 bedeutet.

4.  Hydrophilieadditiv nach den Ansprüchen 1 bis 3, **dadurch gekennzeichnet, dass** in der Formel (I) n für die Zahl 2 steht.

5.  Hydrophilieadditiv nach den Ansprüchen 1 bis 4, **dadurch gekennzeichnet, dass** in der Formel (I) R für einen linearen Alkylrest mit 9 C-Atomen steht, k den Wert 5 hat, n für 2 und C für einen Rest $CH_2$-$CH_2(CH_3)$ steht.

6.  Hydrophilieadditiv nach den Ansprüchen 1 bis 4, **dadurch gekennzeichnet, dass** in der Formel (I) R für einen linearen Alkylrest mit 11 C-Atomen steht, k den Wert 5 hat, n für 2 und C für einen Rest $CH_2$-$CH_2(CH_3)$ steht.

7.  Hydrophilieadditiv nach den Ansprüchen 1 bis 6, **dadurch gekennzeichnet, dass** die Verbindungen der Formel (I) einen Kältetrübungspunkt von niedriger als 12 °C, vorzugsweise niedriger als 10 °C und insbesondere niedriger als 6 °C aufweisen.

8.  Hydrophilieadditiv nach den Ansprüchen 1 bis 7, **dadurch gekennzeichnet, dass** die Verbindungen der Formel (I) einen Kältetrübungspunkt von niedriger als 5 °C und vorzugsweise niedriger als 3 °C aufweisen.

9.  Hydrophilieadditiv nach den Ansprüchen 1 bis 8, **dadurch gekennzeichnet, dass** in der Formel (I) B für eine Mischung aus Ethylenoxid- und Propylenoxid-Gruppen steht.

10. Hydrophilieadditiv nach den Ansprüchen 1 bis 9, **dadurch gekennzeichnet, dass** in der Formel (I) B für Propylenoxid-Gruppen steht.

11. Verwendung von Verbindungen gemäß Formel (I) in Anspruch 1 zur Hydrophilierung von Fasern oder Flächengebilden, die ganz oder teilweise Polyolefine enthalten.

12. Verfahren zur Herstellung von Gegenständen, die ganz oder teilweise Polyolefine enthalten, **dadurch gekennzeichnet, dass** man eine Polymergranulat, das ganz oder teilweise Polyolefine enthält, mit Verbindungen der Formel (I) in Mengen von 0,1 bis 30 Gew.-% bezogen auf das Granulat, versetzt und anschließend in an sich bekannter Weise zu Fasern oder Folien verarbeitet, vorzugsweise durch Extrusion.

13. Verfahren nach Anspruch 12, **dadurch gekennzeichnet, dass** dem Polymergranulat die Verbindungen der Formel (I) in Mengen von 1 bis 15 Gew.-% zusetzt und insbesondere von 1 bis 2,5 Gew.-% zusetzt.

14. Verfahren nach den Ansprüchen 12 oder 13, **dadurch gekennzeichnet, dass** man die durch Extrusion erhaltenen Produkte mit Wasser in Kontakt bringt und anschließend trocknet.

**15.** Verfahren nach Anspruch 14, **dadurch gekennzeichnet, dass** man die durch Extrusion erhaltenen Produkte mit Wasser von 80 bis 90 °C oder mit Wasserdampf in Kontakt bringt.

**Claims**

**1.** An internal hydrophilicizing additive for synthetic polyolefin-containing fibers which corresponds to general formula (I):

A-B-C-B-A          (I)

where A represents a group R-COO in which R is a saturated, branched or unbranched $C_{7-21}$ alkyl group, B represents a group $(C_nH_{2n}O)_k$ in which n is an integer of 2 to 4 and k may assume a value of 1 to 15, and C is a linear or branched alkylene group with the formula $CH_2\text{-}CH(CH_3)$, $CH_2\text{-}CH_2\text{-}CH_2$ or $(CH_2)_4$.

**2.** A hydrophilicizing additive as claimed in claim 1, **characterized in that**, in formula (I), R is a saturated linear alkyl group containing 9 to 13 carbon atoms and preferably 9 to 11 carbon atoms.

**3.** A hydrophilicizing additive as claimed in claims 1 and 2, **characterized in that**, in formula (I), k has a value of 1 to 15, preferably 4 to 10 and more particularly 5.

**4.** A hydrophilicizing additive as claimed in claims 1 to 3, **characterized in that**, in formula (I), n has a value of 2.

**5.** A hydrophilicizing additive as claimed in claims 1 to 4, **characterized in that**, in formula (I), R is a linear alkyl group containing 9 carbon atoms, k has a value of 5, n has a value of 2 and C is a $CH_2\text{-}CH_2(CH_3)$ group.

**6.** A hydrophilicizing additive as claimed in claims 1 to 4, **characterized in that**, in formula (I), R is a linear alkyl group containing 11 carbon atoms, k has a value of 5, n has a value of 2 and C is a $CH_2\text{-}CH_2(CH_3)$ group.

**7.** A hydrophilicizing additive as claimed in claims 1 to 6, **characterized in that** the compounds of formula (I) have a cold cloud point below 12°C, preferably below 10°C and more particularly below 6°C.

**8.** A hydrophilicizing additive as claimed in claims 1 to 7, **characterized in that** the compounds of formula (I) have a cold cloud point below 5°C and preferably below 3°C.

**9.** A hydrophilicizing additive as claimed in claims 1 to 8, **characterized in that**, in formula (I), B stands for a mixture of ethylene oxide and propylene oxide groups.

**10.** A hydrophilicizing additive as claimed in claims 1 to 9, **characterized in that**, in formula (I), B stands for propylene oxide groups.

**11.** The use of compounds corresponding to formula (I) in claim 1 for hydrophilicizing fibers or sheet-form materials completely or partly containing polyolefins.

**12.** A process for the production of articles completely or partly containing polyolefins, **characterized in that** compounds corresponding to formula (I) are added to polymer granules completely or partly containing polyolefins in quantities of 0.1 to 30% by weight, based on the granules, followed by processing in known manner to fibers or films, preferably by extrusion.

**13.** A process as claimed in claim 12, **characterized in that** the compounds of formula (I) are added to the polymer granules in quantities of 1 to 15% by weight and more particularly in quantities of 1 to 2.5% by weight.

**14.** A process as claimed in claim 12 or 13, **characterized in that** the products obtained by extrusion are contacted with water and subsequently dried.

**15.** A process as claimed in claim 14, **characterized in that** the products obtained by extrusion are contacted with water at 80 to 90°C or with steam.

**Revendications**

1. Additif d'hydrophilie interne pour fibres synthétiques contenant des polyoléfines selon la formule générale (I)

$$A\text{-}B\text{-}C\text{-}B\text{-}A \qquad (I)$$

dans laquelle
A représente une radical R-COO, R représentant un radical alkyle saturé, ramifié ou non ramifié comportant de 7 à 21 atomes de carbone,
B représente un groupe $(C_nH_{2n}O)_k$, n représentant des nombres entiers de 2 à 4 et k pouvant avoir les valeurs 1 à 15,
C représente un radical alkylène linéaire ou ramifié du groupe $CH_2\text{-}CH(CH_3)$, $CH_2\text{-}CH_2\text{-}CH_2$ ou $(CH_2)_4$.

2. Additif d'hydrophilie selon la revendication 1,
**caractérisé en ce que**
dans la formule (I), R représente un radical alkyle saturé linéaire comportant de 9 à 13 atomes de C et, de préférence, de 9 à 11 atomes de C.

3. Additif d'hydrophilie, selon les revendications 1 et 2,
**caractérisé en ce que**
dans la formule (I), k représente des valeurs de 1 à 15, de préférence de 4 à 10 et en particulier 5.

4. Additif d'hydrophilie, selon les revendications 1 à 3,
**caractérisé en ce que**
dans la formule (I), n représente le nombre 2.

5. Additif d'hydrophilie, selon les revendications 1 à 4,
**caractérisé en ce que**
dans la formule (I), R représente un radical alkyle linéaire comportant 9 atomes de C, k a la valeur 5, n la valeur 2 et C représente un radical $CH_2\text{-}CH_2(CH_3)$.

6. Additif d'hydrophilie selon les revendications 1 à 4,
**caractérisé en ce que**
dans la formule (I), R représente un radical alkyle linéaire comportant 11 atomes de C, k a la valeur 5, n la valeur 2 et C représente un radical $CH_2\text{-}CH_2(CH_3)$.

7. Additif d'hydrophilie selon les revendications 1 à 6,
**caractérisé en ce que**
les composés de formule I présentent un point de turbidité au froid inférieur à 12 °C, de préférence inférieur à 10 °C et, en particulier, inférieur à 6 °C.

8. Additif d'hydrophilie selon les revendications 1 à 7,
**caractérisé en ce que**
les composés de formule (I) présentent un point de turbidité au froid inférieur à 5 °C et, de préférence, inférieur à 3°C.

9. Additif d'hydrophilie selon les revendications 1 à 8,
**caractérisé en ce que**
dans la formule (I), B représente un mélange de groupes oxyde d'éthylène et de groupes oxyde de propylène.

10. Additif d'hydrophilie selon les revendications 1 à 9,
**caractérisé en ce que**
dans la formule (I), B représente des groupes oxyde de propylène.

11. Utilisation de composés de formule (I) selon la revendication 1 pour augmenter l'hydrophilie de fibres ou d'articles plats constitués en totalité ou partiellement par des polyoléfines.

12. Procédé pour préparer des objets constitués en totalité ou partiellement par des polyoléfines,
**caractérisée en ce qu'**
on mélange un granulat polymère, constitué en totalité ou partiellement par des polyoléfines, avec des composés de formule (I) en quantités de 0,1 à 30 % en poids par rapport au granulat, puis on transforme ce mélange, en fibres ou en feuilles, d'une manière connue en elle même, de préférence par extrusion.

13. Procédé selon la revendication 12,
**caractérisé en ce qu'**
on ajoute, les composés de formule (I) au granulat polymère, en quantités de 1 à 15 % en poids et, en particulier, de 1 à 2,5 % en poids.

14. Procédé selon les revendications 12 ou 13,
**caractérisé en ce qu'**
on met les produits obtenus par extrusion en contact avec de l'eau puis on les sèche.

15. Procédé selon la revendication 14,
**caractérisé en ce qu'**
on met les produits obtenus par extrusion en contact avec de l'eau de 80°C à 90°C ou avec de la vapeur d'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9510648 A
- DE 10015554
- EP 0073479 A
- WO 0175199 A

**In der Beschreibung aufgeführte Nicht-Patentliteratur**

- Ullmann's Encyclopedia of Industrial Chemistry. VCH, 1994, vol. A 17, 572-581